(19) Europäisches Patentamt
European Patent Office
Office européen des brevets

(11) **EP 4 120 161 A1**

(12) **EUROPEAN PATENT APPLICATION**

(43) Date of publication:
**18.01.2023 Bulletin 2023/03**

(51) International Patent Classification (IPC):
**G06Q 10/06** *(2012.01)*

(21) Application number: **22183956.6**

(52) Cooperative Patent Classification (CPC):
**G06Q 10/06311**

(22) Date of filing: **08.07.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.07.2021 FR 2107491**

(71) Applicant: **Genetec Europe**
**75008 Paris (FR)**

(72) Inventor: **BERTON, Alexandre**
**60600 AGNETZ (FR)**

(74) Representative: **Lavoix**
**2, place d'Estienne d'Orves**
**75441 Paris Cedex 09 (FR)**

(54) **COMPUTER-ASSISTED WAIT TIME ESTIMATION**

(57) A method for estimating a wait time associated with a queue serviced by active service points. The method comprises obtaining sensor data relating to the queue; from which a plurality of waiting entities occupying respective positions in the queue is identified, each waiting entity associated with a respective number of individuals; receiving a request to compute an estimated wait time (EWT) for a given one of the individuals; computing the estimated wait time for the given individual; and causing a message comprising the EWT to be made accessible to a communication device associated with the given individual. The EWT is computed based on: (i) a distribution, in terms of the number of individuals per waiting entity, of the waiting entities occupying respective positions in the queue ahead of the given individual; (ii) nominal wait times associated with respective numbers of individuals; and (iii) the number of active service points.

FIG. 1

## Description

## FIELD

The present disclosure pertains generally to estimating wait times associated with a queue and, in particular, to computer-assisted techniques for wait time estimation.

## BACKGROUND

The ability to accurately estimate the wait time of a customer service queue is of commercial relevance, as it can help the service provider balance customer satisfaction with the costs associated with managing service points. Automating this process leads to even greater savings for the service provider, as well as service optimization opportunities.

However, it is presently difficult to obtain an accurate estimate of the wait time of the queue. One option is to compute an estimated wait time based on the length of the queue. While this technique may be of use for individual-access gating venues, such as amusement parks, it does not produce satisfactory results in situations, such as at an airport or a fast food restaurant, where some people are serviced individually and other people are serviced as a group. Thus, for many commercial applications, wait time estimation techniques based purely on the physical length of the queue or on the count of people in the queue yield a poor representation of the actual wait time.

As such, the industry would welcome a more accurate computer-assisted method of estimating wait times, especially in the context of a hybrid customer service environment where groups of people may be serviced together, but where the queue may also include solo customers.

## SUMMARY

According to a first broad aspect, there is provided a method of operating a computer to estimate a wait time associated with a queue serviced by one or more active service points. The method comprising: obtaining sensor data relating to the queue; identifying from the sensor data a plurality of waiting entities occupying respective positions in the queue, each waiting entity associated with a respective number of service-seeking individuals; receiving a request to compute an estimated wait time for a given one of the service-seeking individuals; computing the estimated wait time for the given one of the service-seeking individuals based on: (i) a distribution, in terms of the number of service-seeking individuals per waiting entity, of the waiting entities occupying respective positions in the queue ahead of the given one of the service-seeking individuals; (ii) nominal wait times associated with respective numbers of service-seeking individuals; and (iii) the number of active service points;

and causing a message comprising the estimated wait time to be made accessible to a communication device associated with the given one of the service-seeking individuals.

According to a first broad aspect, there is provided a computer-assisted system for estimating a wait time of a queue serviced by one or more active service points, comprising: at least one sensor configured for obtaining sensor data relating to the queue; and a computing apparatus communicatively coupled to the at least one sensor and configured for: identifying from the sensor data a plurality of waiting entities occupying respective positions in the queue, each waiting entity associated with a respective number of service-seeking individuals; receiving a request to compute an estimated wait time for a given one of the service-seeking individuals; computing the estimated wait time for the given one of the service-seeking individuals based on: (i) a distribution, in terms of the number of service-seeking individuals per waiting entity, of the waiting entities occupying respective positions in the queue ahead of the given one of the service-seeking individuals; (ii) nominal wait times associated with respective numbers of service-seeking individuals; and (iii) the number of active service points; and causing a message comprising the estimated wait time to be made accessible to a communication device associated with the given one of the service-seeking individuals.

According to a third broad aspect, there is provided a non-transitory processor-readable medium storing processor-readable code representing instructions to be executed by a processor operatively coupled to a memory, the processor-readable code comprising code to cause the processor to: obtain sensor data relating to a queue; identify from the sensor data a plurality of waiting entities occupying respective positions in the queue, each waiting entity associated with a respective number of service-seeking individuals; receive a request to compute an estimated wait time for a given one of the service-seeking individuals; compute the estimated wait time for the given one of the service-seeking individuals based on: (i) a distribution, in terms of the number of service-seeking individuals per waiting entity, of the waiting entities occupying respective positions in the queue ahead of the given one of the service-seeking individuals; (ii) nominal wait times associated with respective numbers of service-seeking individuals; and (iii) a number of active service points for servicing the queue; and cause a message comprising the estimated wait time to be made accessible to a communication device associated with the given one of the service-seeking individuals.

According to a fourth broad aspect, there is provided a method of operating a computer to estimate a wait time associated with a queue of people, the method comprising: obtaining sensor data relating to the queue; determining from the sensor data a number of single-person waiting entities in the queue and a number of multi-person waiting entities in the queue; computing an estimated wait time based on at least: (i) the determined number of single-person waiting entities, (ii) the determined number of multi-person waiting entities, (iii) a nominal single-person wait time and (iv) a nominal multi-person wait time; and taking an action based on the computed estimated wait time.

According to a fifth broad aspect, there is provided a non-transitory processor-readable medium storing processor-readable code representing instructions to be executed by a processor operatively coupled to a memory, the processor-readable code comprising code to cause the processor to: obtain sensor data relating to a queue; determine from the sensor data a number of single-person waiting entities in the queue and a number of multi-person waiting entities in the queue; compute an estimated wait time based on at least: (i) the determined number of single-person waiting entities, (ii) the determined number of multi-person waiting entities, (iii) a nominal single-person wait time and (iv) a nominal multi-person wait time; and take an action based on the computed estimated wait time.

According to a sixth broad aspect, there is provided a computer-assisted system for estimating a wait time of a queue of people, comprising: at least one sensor configured for obtaining sensor data relating to the queue; and a computing apparatus communicatively coupled to the at least one sensor and configured for: obtaining sensor data relating to the queue; determining from the sensor data a number of single-person waiting entities in the queue and a number of multi-person waiting entities in the queue; computing an estimated wait time based on at least: (i) the determined number of single-person waiting entities, (ii) the determined number of multi-person waiting entities, (iii) a nominal single-person wait time and (iv) a nominal multi-person wait time; and taking an action based on the computed estimated wait time.

## BRIEF DESCRIPTION OF THE DRAWINGS

Fig. 1 is a block diagram of a computer-assisted system for estimating a wait time associated with a queue, in accordance with a non-limiting embodiment.

Fig. 2 is a flowchart showing a computer-assisted method for wait time estimation, in accordance with a first non-limiting embodiment.

Fig. 3 is a flowchart showing a computer-assisted method for wait time estimation, in accordance with a second non-limiting embodiment.

Fig. 4 is a block diagram showing elements of a computing apparatus used for carrying out the method for wait time estimation.

Fig. 5 is a conceptual diagram illustrating a frame of reference in which positions of a sensor, a queue and a plurality of service points are defined.

Fig. 6A conceptually illustrates the notion of a queue being composed of single-person waiting entities and multi-person waiting entities.

Fig. 6B conceptually illustrates the notion of a distribution of waiting entities in the queue as a function of the number of service-seeking individuals per waiting entity.

Fig. 7 is a block diagram illustrating a request for an estimated wait time from a service-seeking individual in the queue.

## DETAILED DESCRIPTION

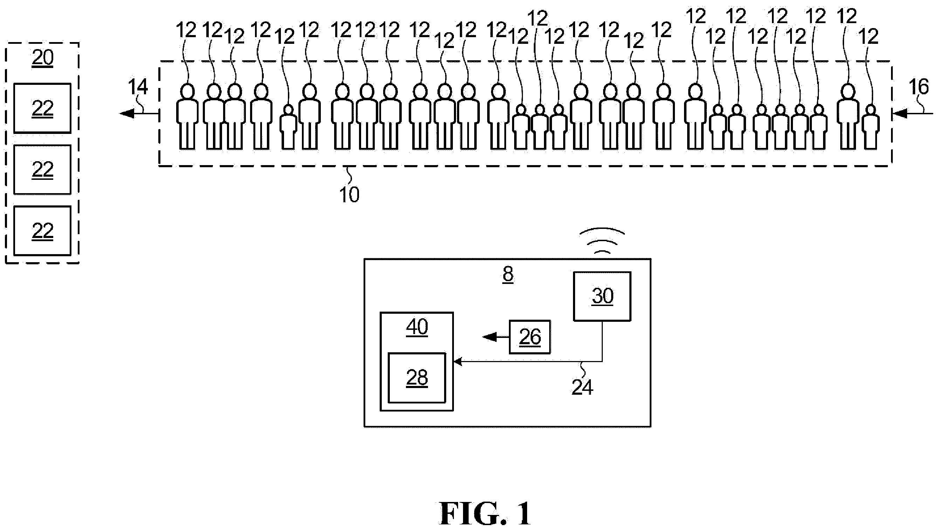

Fig. 1 is a block diagram of a computer-assisted system 8 for estimating a wait time associated with a queue 10 made up of service-seeking individuals 12, such as people. The queue has a front end 14 and a back end 16, with service-seeking individuals 12 entering the queue 10 via the back end 16 and exiting the queue 10 via the front end 14. As service-seeking individuals 12 exit the queue 10 via the front end 14, they are presented with a service area 20 comprising one or more service points 22, at least one of which is active and possibly one or more of which are inactive. An active service point is available to service customers exiting the queue 10 whereas an inactive service point is not. In some instances, all of the service points 22 in the service area 20 may be active. It is not possible to predict, ahead of time, which of the service points 22 will be active and which will be inactive; however, this knowledge can be determined based on sensed data in real-time, as will be described herein below.

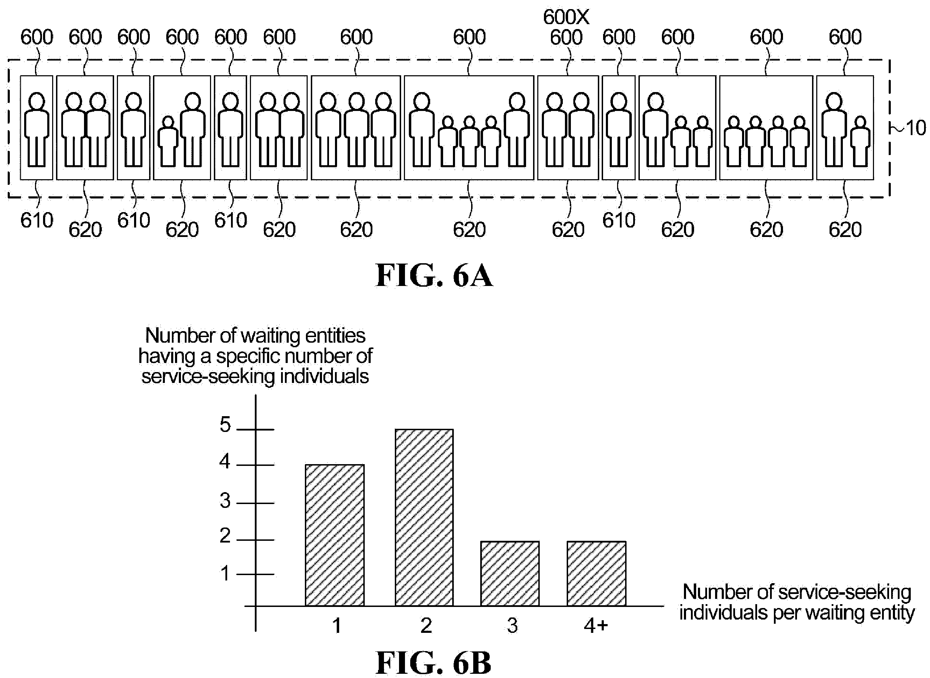

The queue 10 and the service points 22 may be provided in an environment where the option exists to service multiple service-seeking individuals 12 together at the same service point. That is to say, some customers will proceed to a service point individually whereas other customers (e.g., a couple or a family) will proceed to a service point as a group. Non-limiting examples of such an environment include an airport passenger ticketing area and a fast food restaurant. As such, the queue 10 may be viewed as including a set of "waiting entities", with some waiting entities consisting of a single service-seeking individual (such waiting entities may be referred to as single-person waiting entities), and other waiting entities consisting of a plurality of service-seeking individuals (such waiting entities may be referred to as multi-person waiting entities). Fig. 6A shows in further detail the queue 10 being composed of waiting entities 600 including single-person waiting entities 610 and multi-person waiting entities 620. The number of service-seeking individuals per multi-person waiting entity can vary from one waiting entity to another, and may be 2, 3, 4 or more.

Each of the waiting entities 600 occupies an ordered position (i.e., 1st, 2nd, 3rd, etc.) in the queue 10, so that it is meaningful to speak of one waiting entity being "ahead of" or "behind" another waiting entity in the queue 10. Considering now a given one of the waiting entities (occupying the Xth position in the queue), it follows that there exists a distribution, in terms of the number of service-seeking individuals per waiting entity, of the waiting entities occupying respective positions in the queue ahead of the Xth position in the queue. Fig. 6B shows in further detail a distribution of the waiting entities 600 in the queue 10 of Fig. 6A as a function of the number of service-seeking individuals per waiting entity. This distribution is not predictable, but can be measured based on sensed data in real-time, as will be described herein below.

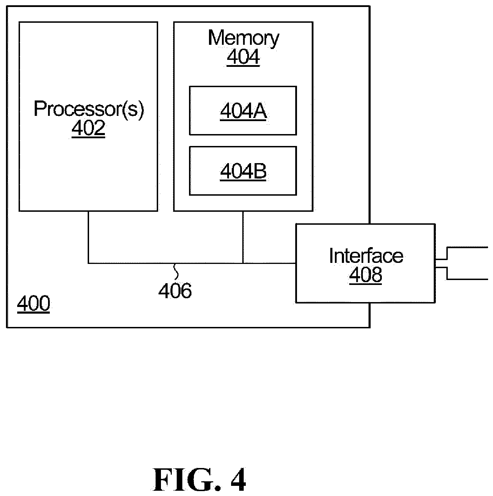

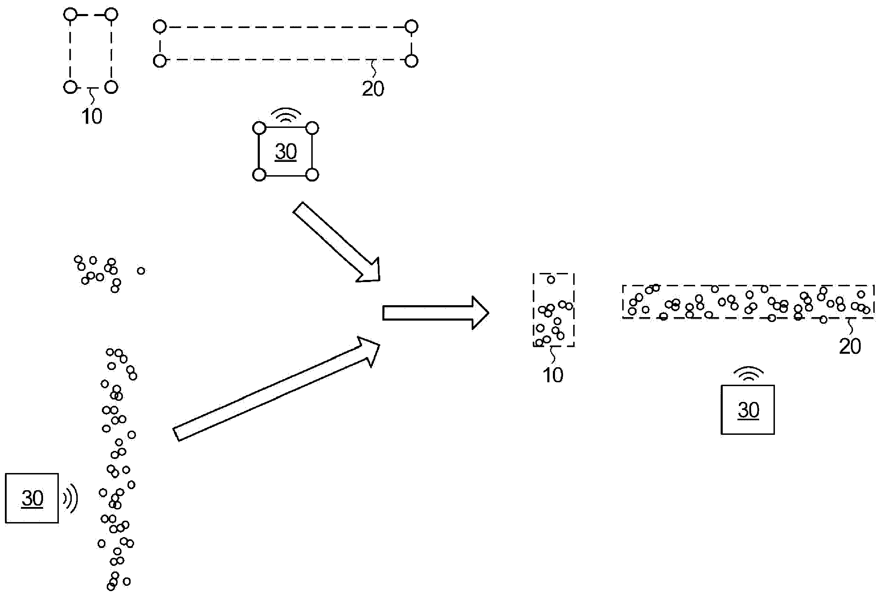

The computer-assisted system 8 comprises a computing apparatus 40 coupled to at least one sensor 30 by a communication link 24, which can be wired or wireless. With reference to Fig. 4, the computing apparatus 40 comprises a memory 404 and one or more processors 402. The memory 404 may be a computer-readable storage medium configured to store computer-readable instructions. The computer-readable instructions may take the form of program modules 404A, 404B, executed by the one or more processors 402. Examples of the program modules 404A, 404B include routines, programs, objects, components, logic, data structures, operating systems and so on that carry out particular tasks, algorithms or functions. The computing apparatus 40 may be implemented in distributed cloud computing environments where tasks are performed by remote processing devices that are linked through a communications network. In such a distributed cloud computing environment, the program modules may be located in both local and remote storage media including memory storage devices.

Part of all of the memory 404 may be embodied as volatile memory, such as random-access memory (RAM) and/or cache memory. Part or all of the memory 404 may be embodied as other removable/non-removable, volatile/non-volatile computer system storage media. By way of example, the memory 404 may include a storage system for reading from and writing to a non-removable, non-volatile magnetic media (not shown and typically called a "hard drive"). Although not shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided as part of the memory 404.

The computing apparatus 40 may also comprise an interface 408 for communicating with various peripheral devices (such as the at least one sensor 30). The interface 408 may also comprise a network card, modem or adapter for communicating with remote devices over a network.

Various components of the computing apparatus 40 (e.g., the one or more processors 402, the memory 404 and the interface 408) may be interconnected by a bus 406. The bus 406 may include any of several types of bus structures, including a memory bus or memory controller, a peripheral bus, and a processor or local bus using any of a variety of bus architectures. By way of example, and not limitation, such architectures may include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus.

For example, in some embodiments, the at least one sensor 30 includes any technology that produces signals or data from which positions of objects to be determined. For example, in some embodiments, the at least one sensor 30 may include one or more of a camera apparatus, a radar apparatus and a lidar apparatus. Suitable non-limiting examples of a camera apparatus are the DINION, FLEXIDOME, AUTODOME and MIC IP cameras with Integrated Video Analysis (IVA) 6.10 from Bosch Security Systems, Inc. Suitable non-limiting example of a radar apparatus are the Axis D2050-VE Network Radar Detector and the AXIS D2110-VE Security Radar from Axis Communications AB. Suitable non-limiting examples of a lidar apparatus is the M8 Lidar Sensor from Quanergy Systems, Inc. and the HDL-32E Surround Lidar Sensor from Velodyne Lidar, Inc. In other embodiments, the at least one sensor 30 may be configured to detect WiFi or Bluetooth signal strength from an emitting object as detected by various access points in order to enable the position of the emitting object to be determined relative to the access points.

In some cases, multiple sensor apparatuses of the same type or of different types are included in the at least one sensor 30. Each of the at least one sensor 30 produces sensor data 26 indicative of a field of view of the surrounding environment. If two or more sensors are used, there may be an overlap in the respective fields of view of multiple sensors. The sensor data 26 is provided to the computing apparatus 40 over the wired or wireless link 24.

As mentioned earlier, the computing device 40 implements various program modules 404A, 404B, one of which includes a wait time module 28. The wait time module 28 is configured to receive or obtain the sensor data 26 transmitted by the at least one sensor 30 and to carry out a wait time estimation method based on various factors and depending on the embodiment, several of which will now be described in greater detail.

Wait Time Estimation Method First Embodiment

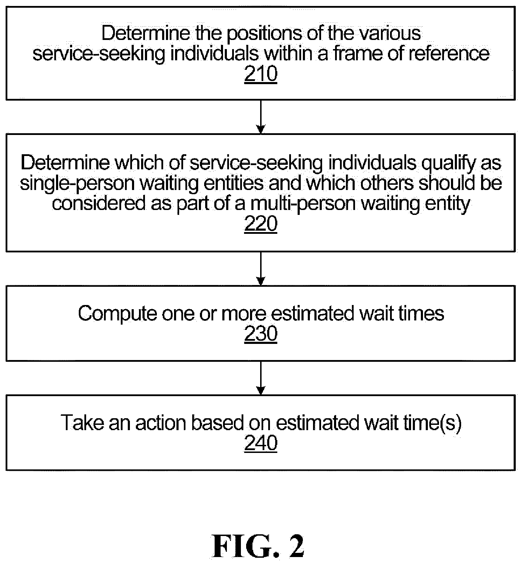

With reference to the flowchart in Fig. 2, a first embodiment of the wait time estimation method may include execution of steps 210 to 240.

**Step 210**

The wait time module 28 is configured to determine the positions of the various service-seeking individuals 12 in the queue 10 within a frame of reference, and to track these positions over time.

With reference to Fig. 5, the frame of reference 500 may be defined by the relative positions of the service area 20 (comprising the service points 22, at least one of which is active), the queue 10 and the at least one sensor 30. As the position of the at least one sensor 30 is now known within this frame of reference 500, the collected sensor data 26 (and the positions of various sensed objects/people derived therefrom) can be registered within the frame of reference 500. When sensor data is received from multiple sensors of different types or from multiple sensors of the same type having different fields of view, the sensor data 26 may be aggregated.

Those skilled in the art will appreciate that processing of the sensor data 26 can be adapted based on a priori knowledge of whether the positions of sensed objects correspond more likely to the queue 10 or to the service area 20, for example. This may lead to more efficient processing and more accurate results, in terms of identifying the service-seeking individuals 12 in the queue 10 and/or the number of active service points among the service points 22. For example, a given service point in the service area 20 may be deemed active by virtue of a service agent being detected as present in a zone proximate the given service point; knowledge of where the service area 20 is located within the frame of reference 500 may lead to a higher confidence level about such a service agent having been detected.

The positions of the service area 20, the queue 10 and the at least one sensor 30 may be specified by a user of the computing apparatus 40 providing either precise coordinates or identifying a general area on a map or floor plan. This information may be entered through the interface 408 of the computing apparatus 40. Alternatively, the positions of the service area 20, the queue 10 and the at least one sensor 30 may be determined from the sensor data 26 itself based by the computing apparatus 40 carrying out an artificial intelligence or machine learning algorithm.

Although Fig. 5 shows positions of the service area 20, the queue 10 and the at least one sensor 30 in 2D, those skilled in the art will appreciate that the positions of the service area 20, the queue 10 and the at least one sensor 30 may be given in 3D coordinates. Also, although the queue is shown as being service-seeking individuals places in single file, this need not be the case, as there could be lateral overlap of in the general direction of the queue (between front and back), and the queue may itself wind and turn in different directions. In each case, the the service-seeking individuals 12 in the queue 10 each have an ordinal position determined based on the sensor data 26.

**Step 220**

Based on the dynamic positions of the service-seeking individuals 12 in the queue 10 as determined at step 210, the wait time module 28 may be configured to determine which of these service-seeking individuals qualify as single-person waiting entities and which others should be considered as part of a multi-person waiting entity. The techniques described in U.S. Patent 10,908,298 to Berton et al., hereby incorporated by reference herein, may be useful in order to identify single- and multi-person waiting entities in the queue 10 based on the detected positions of individuals in the queue, and also to determine the number of people in each multi-person waiting entity.

As a result of step 220, and with reference to Fig. 6A, the wait time module 28 will know the composition of the queue 10 in terms of single-person waiting entities 610 and multi-person waiting entities 620, as well as their relative positions within the queue 10. In addition, the wait time module 28 may know the number of service-seeking individuals 12 in each multi-person waiting entity 620, which would allow the wait time module 28 to know the distribution, in terms of the number of service-seeking individuals per waiting entity, of the waiting entities in the queue, as illustrated in Fig. 6B.

**Step 230**

The wait time module 28 is configured to compute one or more estimated wait times. In particular, the wait time module 28 may be configured to determine an estimated waiting time based on the composition of the queue 10 (in terms of the distribution of waiting entities in the queue).

In one non-limiting example, a total estimated wait time for the queue 10 as a whole (denoted W) may be computed based on at least the determined number of single-person waiting entities 610 (denoted $N_1$), the determined number of multi-person waiting entities 620 (denoted $N_M$), a nominal single-person wait time (denoted $T_1$) and a nominal multi-person wait time ($T_M$). More specifically, the total estimated wait time for the queue 10 as a whole can be computed as the sum of: (i) the product of the determined number of single-person waiting entities 610 and the nominal single-person wait time; and (ii) the product of the determined number of multi-person waiting entities and the nominal multi-person wait time. In other words:

$$W = (N_1 * T_1) + (N_M * T_M)$$

In another non-limiting example, an estimated wait time for a given waiting entity in the queue that is in the $X^{th}$ position (denoted $W(X)$) may be computed based on at least the determined number of single-person waiting entities ahead of the given waiting entity (denoted $N_1(X)$), the determined number of multi-person waiting entities ahead of the given entity (denoted $N_M(X)$) and the aforementioned nominal single- and multi-person wait times ($T_1$ and $T_M$). More specifically, the total estimated wait time for the given waiting entity can be computed as the sum of: (i) the product of the determined number of single-person waiting entities ahead of the given waiting entity (denoted $N_1(X)$) and the nominal single-person wait time; and (ii) the product of the determined number of multi-person waiting entities ahead of the given waiting entity (denoted $N_M(X)$) and the nominal multi-person wait time. In other words:

$$W(X) = (N_1(X) * T_1) + (N_M(X) * T_M)$$

The nominal wait times (i.e., the nominal single-person wait time $T_1$ and the nominal multi-person wait time $T_M$) may be stored in the memory 404. Alternatively, they can be determined based on measured wait times for previously serviced waiting entities. For example, for a particular waiting entity in the queue 10 (e.g., a single-person waiting entity or a multi-person waiting entity), the wait time module 28 may be configured to track an actual wait time for the particular waiting entity once it is being serviced (e.g., once it is detected as entering the service area 20), and then to update the nominal wait time (i.e., the nominal single-person wait time $T_1$ or the nominal multi-person wait time $T_M$, as appropriate) based on the actual wait time for the particular waiting entity.

Those skilled in the art will appreciate that, in practice, the nominal multi-person wait time for a waiting entity composed of Y people is not Y times the nominal single-person wait time, hence the need for a discrimination between at least waiting entities composed of a single person and those composed of multiple people.

Of course, a greater level of discrimination may be provided, i.e., rather than being classified as either simply a single-person waiting entity or a multi-person waiting entity, a waiting entity may be classified as a single-person waiting entity, a 2-person waiting entity, a 3-person waiting entity, a 4-person waiting entity, and so on. As such, in this variant, it is required to know the nominal multi-group wait times (denoted as $T_2$, $T_3$, $T_4$, etc.) associated with various numbers of service-seeking individuals (e.g., 2, 3, 4 or more) in each group. This helps the current method capitalize on the insight that the nominal multi-person wait time for a waiting entity composed of Y people tends not to equal Y times the nominal single-person wait time.

In accordance with this variant, the estimated wait time for the entire queue may be computed as the sum, over each possible number of service-seeking individuals from 1 to N (where N is the maximum number of service-seeking individuals in a group), of the product of (i) the number of waiting entities comprising that number of service-seeking individuals and (ii) the nominal wait time associated with that number of service-seeking individuals. In other words:

$$W = \sum_{i=1}^{N}(N_i * T_i).$$

Similarly, the estimated wait time for a given waiting entity in the queue that is in the $X^{th}$ position (denoted $W(X)$) may be computed as the sum, over each possible number of service-seeking individuals from 1 to N (denoted i), of the product of (i) the number of waiting entities comprising that number of service-seeking individuals and occupying respective positions in the queue ahead of the given waiting entity (denoted Ni(X)) and (ii) the nominal wait time $T_i$ associated with that number of service-seeking individuals. In other words:

$$W(X) = \sum_{i=1}^{N}(N_i(X) * T_i).$$

Here again, to determine the nominal wait time $T_i$ associated with a specific number of service-seeking individuals i, the wait time module may be configured to measure an actual wait time for a waiting entity composed of the specific number of service-seeking individuals from start to finish of that waiting entity being serviced by an active service point, and then to update the nominal wait time associated with the specific number of service-seeking individuals based on the actual wait time for that waiting entity.

When computing the estimated wait time (e.g., W or W(X)), it may be useful to also take into consideration the number of service points 22 that are active. Specifically, all estimated wait times discussed above may be divided by the number of active service points in the service area in order to produce a more accurate estimated wait time.

**Step 240**

With the estimated wait time(s) having been computed, the wait time module 28 is also configured to take an action based on such estimated wait time(s). For example, considering the overall wait time W for the entire queue, the wait time module 28 may issue a command to open (i.e., render active) an inactive service point in the service area 20 if the estimated wait time W exceeds a threshold. Conversely, the wait time module 28 may issue a command to close (i.e., render inactive) an active service point in the service area if the estimated wait time W is below a threshold. Such commands may be sent to a service management entity (not shown) in order to trigger physical service actions that have an effect on migration of the queue 10 and on subsequent measurements of actual wait times and possibly on the values of nominal wait times.

Wait Time Estimation Method Second Embodiment

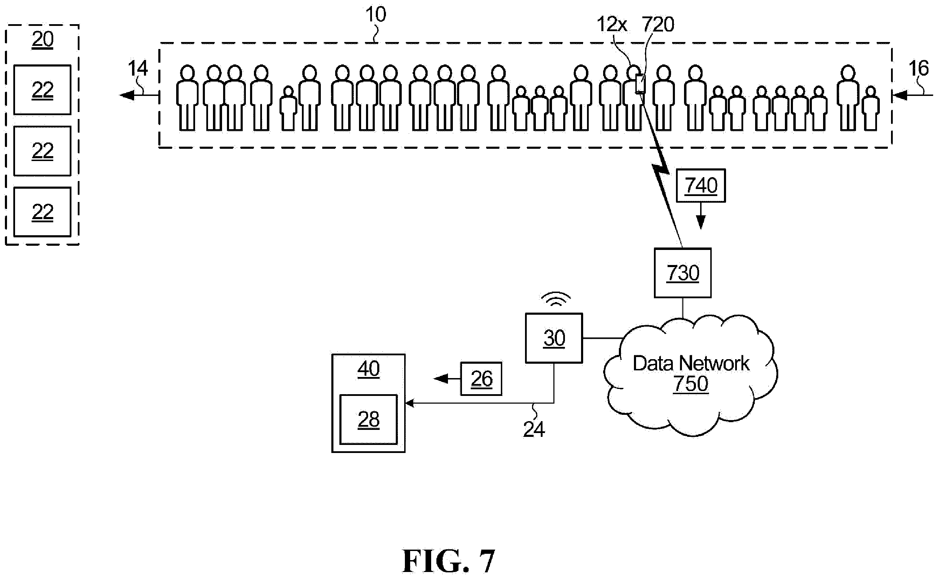

In the context of this second embodiment of the wait time estimation method, and with reference to Fig. 7, it is considered that a particular one of the service-seeking individuals in the queue 10 (denoted 12X) requests to know the estimated amount of time that he or she will need to wait in the queue before being serviced. The particular service-seeking individual 12X has access to a communication apparatus 720 (e.g., a smartphone) and provides a server 730 with a request 740. The communication apparatus 720 may be connected to the server 730 over one or more wireless links and one or more data networks, such as the internet, for example. The request 740 may be sent in various ways, e.g., by logging on to a secure site, accessing a web link or sending an SMS message, to name a few non-limiting possibilities. In some embodiments, the server 730 is the computing apparatus 40 itself, which carries out the wait time estimation method being described. In other embodiments, such as the one shown in Fig. 7, the server 730 is communicatively coupled to the computing apparatus 40 over one or more data networks 750, such as the internet, for example.

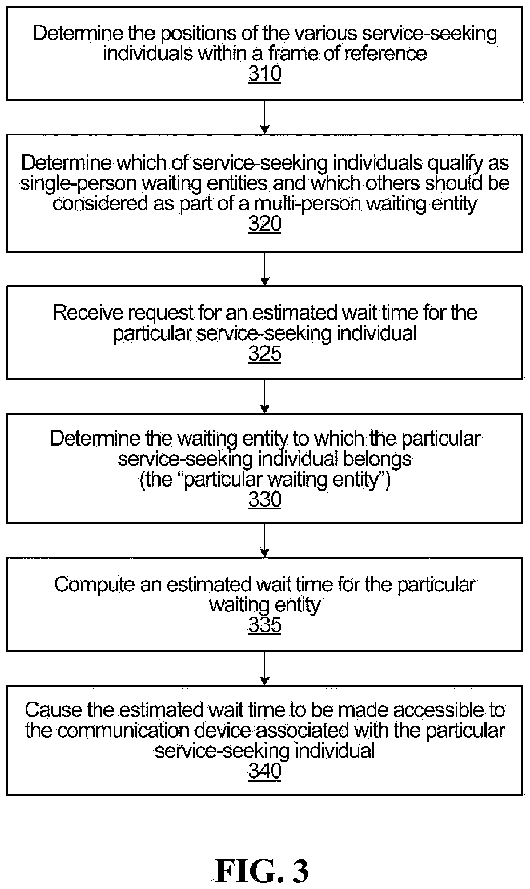

With reference to the flowchart in Fig. 3, the second embodiment of the wait time estimation method may include execution of steps 310 to 340.

**Steps 310 and 320**

These steps may be identical to steps 210 and 220 discussed above.

**Step 325**

The wait time estimation module 28 is configured to receive the aforementioned request 740 for an estimated wait time for the particular service-seeking individual 12X. This can involve transmission of the request 740 from the communication apparatus 720 to the server 730 to the computing apparatus 40, for example.

**Step 330**

The wait time module 28 is configured to identify the waiting entity to which the particular service-seeking individual 12X belongs. To this end, the request 740 may include location information (e.g., GPS coordinates) associated with the communication apparatus 720 from which the request 740 emanates. Alternatively, the location information can be transmitted in a separate message but the wait time module 28 may be configured to trace it back to the same communication apparatus 720 as the one that issued the request 740, e.g., through use of the same IP or MAC address.

The wait time module 28 is configured to correlate the received location information regarding communication apparatus 720 with the locations of the service-seeking individuals 12 and/or waiting entities 600 as determined at step 320. This allows the wait time module 28 to identify the particular service-seeking individual 12X and/or the waiting entity to which the particular service-seeking individual 12X belongs. For purposes of simplicity, one may refer to the waiting entity to which the particular service-seeking individual 12X belongs as the "particular waiting entity", which is denoted in Fig. 6A using reference number 600X.

**Step 335**

The wait time module 28 is configured to compute an estimated wait time for the particular waiting 600X.

In a simple embodiment, each waiting entity is classified as either a single-person waiting entity or a multi-person waiting entity. Accordingly, the estimated wait time for the particular waiting entity 600X may be computed as the sum of: (i) the product of the determined number of single-person waiting entities ahead of that waiting entity (denoted $N_1(X)$) and the nominal single-person wait time (denoted $T_1$); and (ii) the product of the determined number of multi-person waiting entities ahead of that waiting entity (denoted $N_M(X)$) and the nominal multi-person wait time (denoted $T_M$). In other words:

$$W(X) = (N_1(X) * T_1) + (N_M(X) * T_M).$$

If a more precise estimate is desired, each waiting entity is classified as a single-person waiting entity, a 2-person waiting entity, a 3-person waiting entity, a 4-person waiting entity, and so on. As such, it is required to know the nominal multi-group wait times associated with various numbers of service-seeking individuals (e.g., 1, 2, 3, 4 or more). Accordingly, the estimated wait time for the particular waiting entity may be computed as the sum, over each possible number of service-seeking individuals (denoted i), of the product of (i) the number of waiting entities comprising that number of service-seeking individuals and occupying respective positions in the queue ahead of the particular waiting entity (denoted $Ni(X)$) and (ii) the nominal wait time associated with that number of service-seeking individuals (denoted $Ti$). In other words:

$$W(X) = \sum_{i=1}^{N}(N_i(X) * T_i).$$

To determine $T_i$, the nominal wait time associated with a specific number of service-seeking individuals, the wait time module 28 may be configured to measure an actual wait time for a waiting entity composed of the specific number of service-seeking individuals i from start to finish of that waiting entity being serviced by an active service point, and then to update $T_i$, the nominal wait time associated with the specific number of service-seeking individuals, based on the actual wait time for that waiting entity.

It may be useful, when computing the estimated wait time W(X), to also take into consideration the number of service points 22 that are active. Specifically, W(X) may be divided by the number of active service points in the service area in order to produce a more accurate estimated wait time.

**Step 340**

Having computed the estimated wait time W(X) for the particular waiting entity 600X, the wait time module 28 causes the estimated wait time W(X) to be made accessible to the communication device 720 associated with the particular service-seeking individual 12X. This can include causing transmission of a text message directly to a phone number or address associated with the communication device 720 or providing the information on the server 730 or the service provider's website or a third party provider's website, which may be accessible by the communication device 720 at the individual's convenience.

In these and other embodiments, the wait time module 28 may re-compute the estimated wait times W or W(X) frequently or in a periodic manner as individual waiting entities are serviced by the at least one active service point and as new service-seeking individuals enter the queue.

The computer-readable storage medium referred to above can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, does not include transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from such computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer-readable program instructions for storage in the computer-readable storage medium within the respective computing/processing device.

The computer-readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer-readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer-readable program instructions to personalize the electronic circuitry, in order to perform aspects of the present disclosure.

Aspects of the present disclosure are described herein with reference to flowchart/signal flow illustrations and/or block diagrams of methods, apparatus (systems), and computer program products according to various embodiments. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart and/or block diagram block or blocks.

The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowcharts and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The descriptions of the various embodiments of the present disclosure have been presented for purposes of illustration and are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It should be appreciated that throughout the specification, discussions utilizing terms such as "processing", "computing", "calculating", "determining", "analyzing" or the like, can refer to the action and/or processes of a computer or computing system, or similar electronic computing device, that manipulate and/or transform data represented as physical, such as electronic, quantities into other data similarly represented as physical quantities.

Additionally, reference throughout this disclosure to "one embodiment," "exemplary embodiment," or "an embodiment" means that a particular feature, structure or characteristic described in connection with the embodiment is included in at least one embodiment of the present disclosure. Thus, appearances of the phrases "in one embodiment," "in an exemplary embodiment," or "in an embodiment" in various places throughout this specification are not necessarily all referring to the same embodiment, although this may be the case in some instances. Furthermore, the particular features, structures or characteristics may be combined in any suitable manner, as would be apparent to one of ordinary skill in the art from this disclosure, in one or more embodiments. Similarly it should be appreciated that, in the above description of example embodiments, various features are sometimes grouped together in a single embodiment, figure, or description thereof for the purpose of streamlining the disclosure and aiding in the understanding of one or more of the various aspects. This method of disclosure, however, is not to be interpreted as reflecting an intention more features are features are required than are expressly recited in each claim. Rather, as the following claims reflect, aspects may lie in less than all features of a single foregoing disclosed embodiment. Thus, the claims following the Detailed Description are hereby expressly incorporated into this Detailed Description, with each claim standing on its own as a separate embodiment. Furthermore, while some embodiments described herein include some but not other features included in other embodiments, combinations of features of different embodiments are meant to be within the scope of the disclosure, and form different embodiments, as would be understood by those in the art. For example, in the following claims, any of the claimed embodiments can be used in any combination.

As used herein, unless otherwise specified, the use of the ordinal adjectives "first", "second", "third", etc., to describe a common object or step, merely indicate that different instances of like objects or steps are being referred to, and are not intended to imply that the objects or steps so described must be in a given sequence, either temporally, spatially, in ranking, or in any other manner.

It is noted that various individual features may be described only in one exemplary embodiment herein. The particular choice for description herein with regard to a single exemplary embodiment is not to be taken as a limitation that the particular feature is only applicable to the embodiment in which it is described. All features described herein may be equally applicable to, additive, or interchangeable with any or all of the other exemplary embodiments described herein and in any combination or grouping or arrangement. In particular, use of a single reference numeral herein to illustrate, define, or describe a particular feature does not mean that the feature cannot be associated or equated to another feature in another drawing figure or description. Further, where two or more reference numerals are used in the figures or in the drawings, this should not be construed as being limited to only those embodiments or features, they are equally applicable to similar features or not a reference numeral is used or another reference numeral is omitted.

Also, when the phrase "at least one of A and B" is used, this phrase is intended to and is hereby defined as a choice of A or B or both A and B, which is similar to the phrase "and/or". Where more than two variables are present in such a phrase, this phrase is hereby defined as including only one of the variables, any one of the variables, any combination of any of the variables, and all of the variables.

The foregoing description and accompanying drawings illustrate the principles and modes of operation of certain embodiments. However, these embodiments should not be considered limiting. Additional variations of the embodiments discussed above will be appreciated by those skilled in the art and the above-described embodiments should be regarded as illustrative rather than restrictive. Accordingly, it should be appreciated that variations to those embodiments can be made by those skilled in the art without departing from the scope of the invention as defined by the following claims.

## Claims

1. A method of operating a computer to estimate a wait time associated with a queue serviced by one or more active service points, the method comprising:

   obtaining sensor data relating to the queue;
   identifying from the sensor data a plurality of waiting entities occupying respective positions in the queue, each waiting entity associated with a respective number of service-seeking individuals;
   receiving a request to compute an estimated wait time for a given one of the service-seeking individuals;
   computing the estimated wait time for the given one of the service-seeking individuals based on:

   (i) a distribution, in terms of the number of service-seeking individuals per waiting entity, of the waiting entities occupying respective positions in the queue ahead of the given one of the service-seeking individuals;
   (ii) nominal wait times associated with respective numbers of service-seeking individuals; and
   (iii) the number of active service points; and

causing a message comprising the estimated wait time to be made accessible to a communication device associated with the given one of the service-seeking individuals.

2. The method defined in claim 1, further comprising determining the number of active service points from the sensor data.

3. The method defined in claim 2, further comprising processing the sensor data to determine a number of service points and detecting presence or absence of a service agent at each of said service points, wherein the number of active service points is determined to be the number of service points where presence of a service agent is detected.

4. The method defined in claim 1, wherein the sensor data comprises at least one of camera data, radar data and lidar data.

5. The method defined in claim 1, wherein identifying from the sensor data the plurality of waiting entities comprises determining, based on the sensor data, dynamic locations of service-seeking individuals in the queue and, based on the dynamic locations of the service-seeking individuals, determining which of the service-seeking individuals form part of a common waiting entity.

6. The method defined in claim 5, wherein the sensor data is obtained from at least one sensor, and wherein the method further comprises registering the sensor data within a frame of reference in which are defined the positions of (i) a service area comprising the at least one active service point, (ii) the queue and (iii) the at least one sensor.

7. The method defined in claim 1, further comprising: (i) tracking an actual wait time for a particular one of the waiting entities in the queue, the particular one of the waiting entities associated with a particular number of service-seeking individuals, and (ii) updating the nominal wait time associated with the particular number of service-seeking individuals based on the actual wait time for the particular one of the waiting entities.

8. The method defined in claim 1, further comprising: determining the nominal wait time associated with a particular number of service-seeking individuals based on measured wait times for previously serviced waiting entities associated with the particular number of service-seeking individuals.

9. The method defined in claim 1, wherein the request is received from the communication device associated with the particular service-seeking individual of the given one of the service-seeking individuals.

10. The method defined in claim 5, wherein identifying the waiting entities occupying respective positions in the queue ahead of the given one of the service-seeking individual includes identifying a given waiting entity to which the given one of the service-seeking individuals belongs and identifying the waiting entities occupying respective positions in the queue ahead of the given waiting entity.

11. The method defined in claim 10, wherein the identifying is based on location information received from the communication device.

12. The method defined in claim 11, wherein the location information is part of the request.

13. The method defined in claim 11, wherein the identifying comprises correlating the location information received from the communication device with the dynamic locations of the service-seeking individuals in the queue.

14. The method defined in claim 1, wherein computing the estimated wait time for the given one of the service-seeking individuals includes determining a sum, over each number of service-seeking individuals, of the product of (i) the number of waiting entities comprising that number of service-seeking individuals and occupying respective positions in the queue ahead of the given one of the service-seeking individuals and (ii) the nominal wait time associated with that number of service-seeking individuals.

15. The method defined in claim 1, performed periodically as individual ones of the plurality of waiting entities are serviced by the one or more active service points.

16. A computer-assisted system for estimating a wait time of a queue serviced by one or more active service points, comprising:

   at least one sensor configured for obtaining sensor data relating to the queue; and
   a computing apparatus communicatively coupled to the at least one sensor and configured for:

      identifying from the sensor data a plurality of waiting entities occupying respective positions in the queue, each waiting entity associated with a respective number of service-seeking individuals;
      receiving a request to compute an estimated wait time for a given one of the service-seeking individuals;

computing the estimated wait time for the given one of the service-seeking individuals based on:

      (i) a distribution, in terms of the number of service-seeking individuals per waiting entity, of the waiting entities occupying respective positions in the queue ahead of the given one of the service-seeking individuals;
      (ii) nominal wait times associated with respective numbers of service-seeking individuals; and
      (iii) the number of active service points; and

   causing a message comprising the estimated wait time to be made accessible to a communication device associated with the given one of the service-seeking individuals.

17. A non-transitory processor-readable medium storing processor-readable code representing instructions to be executed by a processor operatively coupled to a memory, the processor-readable code comprising code to cause the processor to:

   obtain sensor data relating to a queue;
   identify from the sensor data a plurality of waiting entities occupying respective positions in the queue, each waiting entity associated with a respective number of service-seeking individuals;
   receive a request to compute an estimated wait time for a given one of the service-seeking individuals;
   compute the estimated wait time for the given one of the service-seeking individuals based on:

      (i) a distribution, in terms of the number of service-seeking individuals per waiting entity, of the waiting entities occupying respective positions in the queue ahead of the given one of the service-seeking individuals;
      (ii) nominal wait times associated with respective numbers of service-seeking individuals; and
      (iii) a number of active service points for servicing the queue; and

   cause a message comprising the estimated wait time to be made accessible to a communication device associated with the given one of the service-seeking individuals.

18. A method of operating a computer to estimate a wait time associated with a queue of people, the method comprising:

obtaining sensor data relating to the queue;
determining from the sensor data a number of single-person waiting entities in the queue and a number of multi-person waiting entities in the queue;
computing an estimated wait time based on at least: (i) the determined number of single-person waiting entities, (ii) the determined number of multi-person waiting entities, (iii) a nominal single-person wait time and (iv) a nominal multi-person wait time; and
taking an action based on the computed estimated wait time.

FIG. 1

Determine the positions of the various
service-seeking individuals within a frame of reference
210

Determine which of service-seeking individuals qualify as
single-person waiting entities and which others should be
considered as part of a multi-person waiting entity
220

Compute one or more estimated wait times
230

Take an action based on estimated wait time(s)
240

# FIG. 2

Determine the positions of the various service-seeking
individuals within a frame of reference
310

Determine which of service-seeking individuals qualify as
single-person waiting entities and which others should be
considered as part of a multi-person waiting entity
320

Receive request for an estimated wait time for the
particular service-seeking individual
325

Determine the waiting entity to which the particular
service-seeking individual belongs
(the "particular waiting entity")
330

Compute an estimated wait time for the particular
waiting entity
335

Cause the estimated wait time to be made accessible to
the communication device associated with the particular
service-seeking individual
340

# FIG. 3

**FIG. 4**

**FIG. 6A**

**FIG. 6B**

Data Network 750

730

740

12x 720

16

10

14

20

22

22

22

30

24

26

40

28

**FIG. 7**

Europäisches
Patentamt

European
Patent Office

Office européen
des brevets

# EUROPEAN SEARCH REPORT

**Application Number**

**EP 22 18 3956**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2009/119142 A1 (YENNI EDWARD [US] ET AL) 7 May 2009 (2009-05-07) * paragraph [0004] – paragraph [0182]; claims 1-26; figures 1-57 * ----- | 1-18 | INV. G06Q10/06 |
| Y | US 10 908 298 B2 (GENETEC INC [CA]) 2 February 2021 (2021-02-02) * column 1 – column 6; claims 1-25; figures 1-7 * ----- | 1-18 | |

**TECHNICAL FIELDS SEARCHED (IPC)**

G06Q
H04L
G01C
G06K
G06V

The present search report has been drawn up for all claims

| Place of search | Date of completion of the search | Examiner |
|---|---|---|
| Munich | 12 December 2022 | Viets, Ana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 3956

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2022

| Patent document cited in search report | | Publication date | Patent family member(s) | | Publication date |
|---|---|---|---|---|---|
| US 2009119142 | A1 | 07-05-2009 | CA | 2704577 A1 | 14-05-2009 |
| | | | CN | 101911108 A | 08-12-2010 |
| | | | EP | 2220611 A2 | 25-08-2010 |
| | | | HK | 1151372 A1 | 27-01-2012 |
| | | | MX | 339490 B | 27-05-2016 |
| | | | US | 2009119142 A1 | 07-05-2009 |
| | | | US | 2013124247 A1 | 16-05-2013 |
| | | | US | 2015088570 A1 | 26-03-2015 |
| | | | WO | 2009061857 A2 | 14-05-2009 |
| US 10908298 | B2 | 02-02-2021 | FR | 3079924 A1 | 11-10-2019 |
| | | | US | 2019310380 A1 | 10-10-2019 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10908298 B, Berton